# EUROPÄISCHE PATENTSCHRIFT

(11) **EP 2 318 129 B1**
(45) Veröffentlichungstag und Bekanntmachung des Hinweises auf die Patenterteilung: **08.02.2012**
(21) Anmeldenummer: 09780346.4
(22) Anmeldetag: 09.07.2009
(51) Int. Cl.: B01J 19/24, B01J 8/22, B01J 8/24, B01J 4/00

(54) **PARALLELISIERTE STRAHLSCHLAUFENREAKTOREN**
PARALLELIZED JET LOOP REACTORS
RÉACTEURS À JET ET À BOUCLE DE CIRCULATION MONTÉS EN PARALLÈLE

(30) Priorität: 28.08.2008 DE 102008041652
(43) Veröffentlichungstag der Anmeldung: 11.05.2011
(73) Patentinhaber: Evonik Oxeno GmbH, 45772 Marl (DE)
(72) Erfinder: BECKER, Marc, 44359 Dortmund (DE); FRANKE, Robert, 45772 Marl (DE); BÜSCHKEN, Wilfried, 45721 Haltern am See (DE); BÖRNER, Armin, 18059 Rostock (DE); HOLZ, Jens, 18196 Kessin (DE)
(86) Internationale Anmeldenummer: PCT/EP2009/058711
(87) Internationale Veröffentlichungsnummer: WO 2010/023018

(56) Entgegenhaltungen:
- WO-A-2009/024446
- DE-A1- 19 857 409
- FR-A- 1 503 643

## Beschreibung

Die Erfindung betrifft eine Vorrichtung für die kontinuierliche Umsetzung einer Flüssigkeit mit mindestens einem weiteren Fluid.

Eine Flüssigkeit ist ein im Wesentlichen inkompressibles, fließfähiges Medium. Ein Gas ist ein kompressibles, fließfähiges Medium. Ein Fluid ist entweder eine Flüssigkeit oder ein Gas. Ein insbesondere mittels eines Gases oder einer Flüssigkeit fluidisierter, gegebenenfalls pulverförmiger Feststoff ist ebenfalls ein Fluid im Sinne der Erfindung.

Im Rahmen der vorliegenden Erfindung wird unter zugeführter Flüssigkeit ein Stoff oder Stoffgemisch verstanden, der/das in der Apparatur unter Reaktionsbedingungen im flüssigen Aggregatzustand vorliegt und mindestens einen Reaktanden aufweist. Unter Gas wird ein reines Gas oder ein Gasgemisch, das zumindest einen Reaktanden und gegebenenfalls ein Inertgas aufweist, verstanden. Ein Beispiel für ein Gas, das zwei Reaktanden aufweist, ist das aus Wasserstoff und Kohlenmonoxid bestehende Synthesegas, das beispielsweise bei Hydroformylierungen eingesetzt wird.

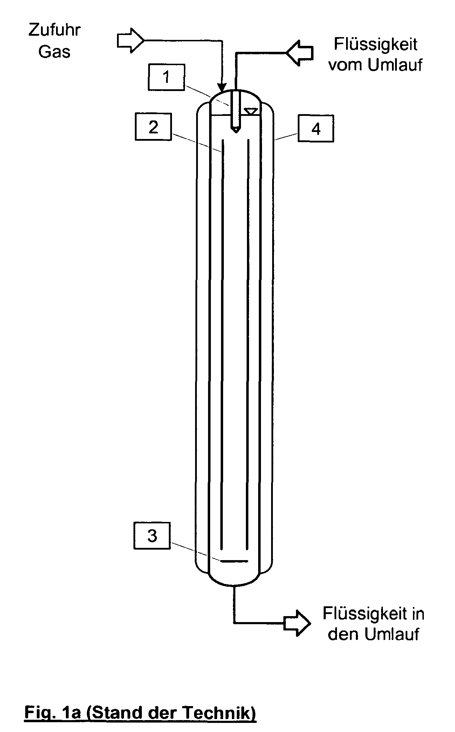

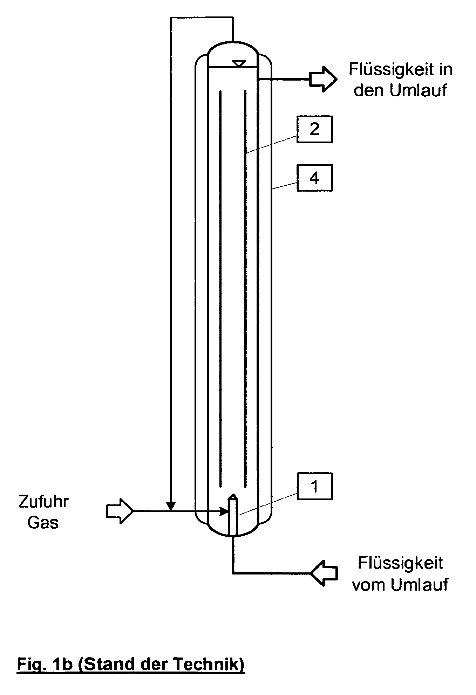

Bei einem Strahlschlaufenreaktor (engl.: jet loop reactor) im Sinne der Erfindung handelt es sich um eine Vorrichtung für die kontinuierliche Umsetzung einer Flüssigkeit und mindestens eines weiteren Fluids, bei der die Flüssigkeit unter Druck durch eine Düse in einen Reaktionsraum eintritt, diesen längs entlang einer Hauptstromrichtung durchströmt, am dem gegenüber der Düse gelegenen Ende des Reaktionsraums umgelenkt wird, entgegen der Hauptstromrichtung zurückströmt und erneut in Hauptstromrichtung beschleunigt wird, sodass sich innerhalb des Reaktorraums ein interner Flüssigkeitskreislauf (Schlaufe) einstellt. Das zweite Fluid wird von der Flüssigkeitsströmung mitgerissen und reagiert auf dem Weg entlang der Schlaufe. Die Flüssigkeit dient mithin als Treibstrahlmedium. Zum Eintrag der kinetischen Energie in die Flüssigkeit ist dem Reaktionsraum ein äußerer Flüssigkeitsumlauf zugeordnet, in welchem ein Teil der Flüssigkeit außerhalb des Reaktionsraums im Kreislauf geführt wird. Innerhalb des äußeren Flüssigkeitsumlaufs ist eine Pumpe vorgesehen, welche dem Flüssigkeitsstrom die für die Etablierung der Schleifenströmung innerhalb des Reaktors notwendige kinetische Energie aufprägt. Die Düse wird entsprechend aus dem äußeren Kreislauf gespeist. Bekannte Strahlschlaufenreaktoren sind in den Figuren 1a und 1 b dargestellt.

Eine gute Einführung in die Technik der Strahlschlaufenreaktoren bietet: P. Zehner, M. Krause: "Bubble Columns", Ullmann's Encyclopedia of Industrial Chemistry, Electronic Release, 7th ed., Chapter 4, Wiley-VCH, Weinheim [2005].

Für die effiziente Durchführung von Mehrphasenreaktionen in Gas/Flüssigkeit- oder auch Gas/Flüssigkeit/Flüssigkeit-Systemen ist eine intensive Vermischung der beteiligten Phasen zur Vermeidung von Stofftransportlimitierungen von größter Bedeutung. Technisch wird dies durch eine Reihe verschiedenster Reaktorkonzepte beginnend bei Rührkesseln über Blasensäulen und Füllkörperkolonnen bis hin zu Rohrreaktoren mit statischen Mischern realisiert [K. Schügerl; "Neue Bioreaktoren für aerobe Prozesse"; Chem.-Ing.-Tech. 52, (12), 1980, 951-965]. Der Nachteil dieser Systeme liegt in ihren zum Teil vergleichsweise niedrigen volumetrischen Stoffübergangskoeffizienten (k_{L}a).

Zur Verbesserung des Stoffübergangs speziell in der Mehrphasenkatalyse wurden verschiedene Reaktorkonzepte entwickelt, deren gemeinsames Kennzeichen hohe Kreislaufströme sind [E.H. Stitt; "Alternative multiphase reactors for fine chemicals - A world beyond stirred tanks?" Chem. Eng. J. 90, 2002, 47-60]. Diese erzeugen über entsprechende Mischvorrichtungen, wie Düsen oder Blenden, die benötigten Stoffaustauschflächen. Spezielle Reaktoren auf Basis von Mehrstoffdüsen wurden bereits eingehend untersucht [N. Räbiger; "Hydrodynamik und Stoffaustausch in strahlangetriebenen Schlaufenreaktoren"; Praxiswissen Verfahrenstechnik: Thermische Verfahrenstechnik, Verlag TÜV Rheinland GmbH, Köln, 1988] und, wie in DE 198 36 807 beschrieben, in einer Versuchsanlage für die Hydroformylierung erfolgreich eingesetzt. Der Reaktor zeichnet sich durch hohe Raum-Zeit-Ausbeuten und Stoffübergangsgeschwindigkeiten zwischen Gas- und Flüssigphase aus. Zudem entfällt der üblicherweise für die Gasrückführung benötigte Kreislaufkompressor, da nicht umgesetztes Gas über die Düse im Reaktor erneut in die Flüssigkeit redispergiert wird. Der Gasgehalt im Reaktor lässt sich über den Füllstand und die relative Position der Gasansaugung der Düse frei wählen, eine Füllstandsregelung ist somit nicht erforderlich. Die innerhalb des Reaktors auftretenden großen Umwälzströme ermöglichen darüber hinaus eine nahezu gradientenfreie Fahrweise.

In einem einzelnen Strahlschlaufen-Reaktor kann hierbei das Höhe/DurchmesserVerhältnis nur im engen Bereich von 3 bis 10 variiert werden, um ausreichende Reaktionsvolumina bei vertretbaren Reaktorbauhöhen zu gewährleisten. Das Mischverhalten und der Stoffübergang werden bei gedrungener Ausführung dabei negativ beinflusst, was nur bedingt durch die Anordnung mehrerer Düsen und Leitrohre in einem Reaktor kompensiert werden kann [Y. Gan et al.; "Studies on configuration of jet loop reac-tors with low height-diameter ratio"; Chem. Reac. Eng. Tech. 15 (3), 1999, 268-274]. Zudem wird die Wärmeabfuhr aufgrund des geringen Oberfläche-Volumen-Verhältnisses zunehmend schlechter. Dies kann den Einsatz von Fieldrohren innerhalb des Reaktors zur Vergrößerung der Wärmeaustauschfläche erforderlich machen, wie etwa in DE 198 54 637 beschrieben, wodurch neben einer Beeinträchtigung der internen Umwälzströmung zudem ein höherer konstruktiver Aufwand zu erwarten ist.

Reaktoren mit einem Schlankheitsgrad (Verhältnis von Höhe (H) des Reaktors zu Durchmesser (D) des Reaktors) H/D > 10 ermöglichen vergleichweise höhere Gasgehalte, eignen sich jedoch für ein Scale-up aufgrund der geringen Volumina nicht. Aufgrund der resultierenden Reaktorhöhe ergeben sich bei der Reaktorvergrößerung auf relevante Reaktionsvolumina zunehmend hohe interne Druckverluste und somit eine überproportional hohe Energiedissipation, die zu einer beträchtlichen Verschlechterung der Reaktorleistung führt. Aufgrund des geringeren Durchmessers kann hier jedoch eine ausreichende Wärmeaustauschleistung ohne zusätzliche Einbauten realisiert werden.

Wegen der oben beschriebenen Nachteile der bekannten technischen Reaktoren, liegt der Erfindung die Aufgabe zu Grunde, einen Reaktor oder eine Anordnung von Reaktoren für eine kontinuierliche Fluid-/Flüssigkeit-Reaktion mit einem angemessenen Leistungsprofil bereitzustellen.

Gelöst wird die Aufgabe durch den Gegenstand des Anspruch 1.

Die Erfindung beruht auf der Erkenntnis, dass sich bei der kontinuierlichen Umsetzung einer Flüssigkeit mit einem weiteren Fluid durch eine parallele Verschaltung von Strahlschlaufen-Reaktoren, die einen gemeinsamen äußeren Kreislauf aufweisen, die Vorzüge eines Strahlschlaufen-Reaktors auch für hohe Produktionskapazitäten nutzen lassen.

Gegenstand der vorliegenden Erfindung ist demnach eine Vorrichtung für die kontinuierliche Umsetzung einer Flüssigkeit mit einem weiteren Fluid, die mindestens zwei parallel miteinander verschalteten Strahlschlaufen-Reaktoren und einen gemeinsamen äußeren Flüssigkeitsumlauf aufweist.

Ein weiterer Gegenstand der Erfindung ist ein Verfahren für die kontinuierliche Umsetzung einer Flüssigkeit mit einem weiteren Fluid, wobei mindestens ein gasförmiger Reaktand mit mindestens einem flüssigen Reaktanden umgesetzt wird, das in der erfindungsgemäßen Vorrichtung durchgeführt wird.

Die erfindungsgemäße Vorrichtung weist den Vorteil auf, dass die Vorzüge eines Strahlschlaufen-Reaktors, wie intensiver Stofftransport, hohe Wärmeabfuhr oder Wärmezufuhr, nahezu gradientenfreie Fahrweise, für große Produktionskapazitäten genutzt werden können.

Da die Vorrichtung für die Aufrechterhaltung des äußeren Umlaufs nur eine Pumpe aufweist, sind der Kapitaleinsatz und die Betriebskosten kleiner als bei einer Anlage, die aus mindestens zwei Strahlschlaufen-Reaktoren mit jeweils einem eigenen äußeren Kreislauf besteht. Bevorzugt ist daher eine Ausführung, bei der im äußeren Flüssigkeitsumlauf genau eine Pumpe angeordnet ist.

Eine besonders bevorzugte Ausführungsform der Erfindung zeichnet sich dadurch aus, dass jeder Düse ein Ablauf für die Flüssigkeit zugeordnet ist, dass Düse und Ablauf bezüglich des internen Flüssigkeitskreislaufs diametral im Reaktor angeordnet sind, und dass der äußere Flüssigkeitsumlauf die Düse mit dem Ablauf verbindet. Diese Weiterbildung bildet ein hervorragendes Strömungsprofil aus.

Dank des gemeinsamen äußeren Flüssigkeitsumlaufs ist es vorteilhaft möglich, im äußeren Flüssigkeitsumlauf ein Wärmetauscher zum Austausch von Wärme zwischen der im äußeren Flüssigkeitskreislauf geführten Flüssigkeit und einem Wärmeträger vorzusehen. Interne Wärmetauscher sind dann verzichtbar, was die Strömung innerhalb des Reaktors verbessert. Die Einfuhr oder der Abfuhr von Reaktionswärme geschieht dann besonders effektiv.

Die erfindungsgemäße Vorrichtung eignet sich zur Umsetzung von einer Flüssigkeit (als Treibmedium) mit mindestens einem weiteren Fluid. Es können aber auch neben dem Treibmedium zwei oder mehr Fluide umgesetzt werden. Somit sind folgende Zweiphasenreaktionen durchführbar:
flüssig/flüssig;
flüssig/gasförmig.

Dreiphasenreaktionen sind wie folgt durchführbar:
flüssig/flüssig/flüssig;
flüssig/flüssig/gasförmig;
flüssig/gasförmig/gasförmig;

Die erfindungsgemäße Vorrichtung und das damit ausgeführte erfindungsgemäße Verfahren werden nachfolgend beispielhaft beschrieben. Hierfür zeigen:
- Fig. 1 a:: Strahlschlaufen-Reaktor, Düse oben (Stand der Technik)
- Fig. 1 b:: Strahlschlaufenreaktor, Düse unten (Stand der Technik)
- Fig. 2:: Erfindungsgemäße Verschaltung von Strahlschlaufen-Reaktoren
- Fig. 3a:: Parallelisierte Ausführung von Strahlschlaufen-Reaktoren als Bündel, Düse oben
- Fig. 3b:: Parallelisierte Ausführung von Strahlschlaufen-Reaktoren als Bündel, Düse unten
- Fig. 4a:: Versuchsanlage Beispiel 1
- Fig. 4b:: Versuchsanlage Beispiel 2

Die erfindungsgemäße Vorrichtung zur Durchführung von Reaktionen, bei denen eine Flüssigkeit mit einem weiteren Fluid kontinuierlich und im Gleichstrom umgesetzt wird, besteht im Wesentlichen aus zwei oder mehreren parallel miteinander verschalteten Strahlschlaufen-Reaktoren, die einen gemeinsamen äußeren Flüssigkeitsumlauf aufweisen.

In Figur 1a ist ein konventioneller Strahlschlaufenreaktor dargestellt, bei dem die Strahldüse sich im oberen Teil des Reaktors befindet und die Edukte im oberen Teil des Reaktors eingespeist werden. Der Reaktor besteht aus einem Druckrohr, in dem eine Düse (1), ein Leitrohr (2) und eine Prallplatte (3) installiert sind. Der Reaktor hat einen Heiz- bzw. Kühlmantel (4). Weiterhin kann im oberen Gasraum des Reaktors ein Ventil für die Entnahme von Abgas zur Ausschleusung von inerten Gasanteilen installiert sein (in Figur 1a nicht eingezeichnet).

Das Leitrohr ist bevorzugt konzentrisch zu Strahldüse und Druckkörper angeordnet. Die Strahldüse kann hierbei eine Ein- oder Mehrstoffdüse sein, in einer weiteren Bauform kann diese zudem gesondert mit Impulsaustauschrohr und/oder Diffusor versehen werden. Die Düse taucht bei Betrieb ganz oder teilweise in das flüssige Reaktionsmedium ein, wobei die Eintauchtiefe bis zu mehrere Leitrohrdurchmesser betragen kann. Das Leitrohr hat einen Durchmesser von einem Zehntel bis der Hälfte des Reaktordurchmessers und erstreckt sich im Wesentlichen über die gesamte Länge des Reaktors, wobei diese nach unten versehen mit einem angemessenen Abstand durch die Prallplatte begrenzt wird und das obere Ende bei Betrieb unterhalb der Flüssigkeitsoberfläche liegt. Der Reaktor ist dadurch gekennzeichnet, dass aufgrund der hohen internen Umwälzströmung nur ein geringer Teil der Flüssigkeit über den externen Umlauf der Düse wieder zugeführt wird.

In der erfindungsgemäßen Vorrichtung weisen die verwendeten Strahlschlaufen-Reaktoren hohe Schlankheitsgrade (Verhältnis von Höhe (H) des Reaktors zu Durchmesser (D) des Reaktors) auf. Der Schlankheitsgrad liegt im Bereich von 5 bis 15, vorzugsweise im Bereich von 8 bis 12, besonders bevorzugt im Bereich von 10 bis 12.

Aufgrund des hohen Schlankheitsgrades kann auf den Einbau interner Wärmeaustauscher verzichtet werden, da sowohl über die Mantelfläche als auch über den Wärmeaustauscher des äußeren Kreislaufs ausreichend Wärme ein- bzw. ausgetragen werden kann.

In einer in Figur 1b gezeigten weiteren Ausführung kann die Düse (1) am Boden des Reaktors angeordnet sein. Das Leitrohr (2) ist hierbei bevorzugt konzentrisch zu Strahldüse und Druckkörper angeordnet, wobei die Ausführung der Strahldüse als Ein- oder Mehrstoffdüse erfolgen kann. Die Zufuhr des Gases erfolgt unter Druck. In einer bevorzugten Ausführung erfolgt die Ansaugung des Gases selbsttätig durch den Ejektorbetrieb der Düse. Das Leitrohr (2) hat einen Durchmesser von einem Zehntel bis acht Zehntel, bevorzugt von vier Zehntel bis sieben Zehntel des Reaktordurchmessers und erstreckt sich im Wesentlichen über die gesamte Länge des Reaktors, wobei das obere Ende bei Betrieb unterhalb der Flüssigkeitsoberfläche liegt. Der Reaktor weist eine vergleichsweise höhere interne Umwälzströmung auf, wobei nur ein geringer Teil der Flüssigkeit über den externen Umlauf der Düse wieder zugeführt wird.

Die erfindungsgemäße Vorrichtung besteht zumindest aus zwei Reaktoren. Die Anzahl der Reaktoren liegt vorzugsweise im Bereich von 2 bis 20, besonders bevorzugt im Bereich von 2 bis 14.

Die Reaktoren können unterschiedlich oder bevorzugt gleich sein.

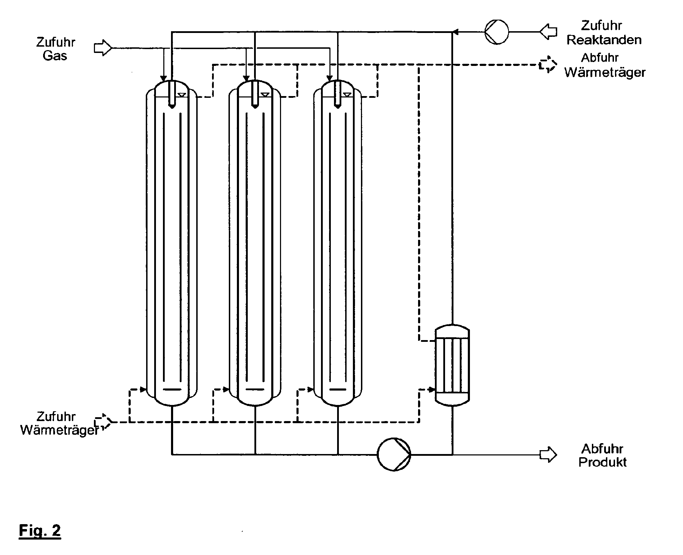

Figur 2 zeigt ein Beispiel einer erfindungsgemäßen Vorrichtung, bestehend aus drei parallel miteinander verschalteten Reaktoren, Umlaufpumpe und Wärmeaustauscher im gemeinsamen äußeren Flüssigkeitsumlauf, bei der Edukte in den oberen Reaktionsraum eingespeist werden. Leitungen zur Entnahme von Abgas aus den oberen Teilen der Reaktoren sind nicht eingezeichnet. In dieser Darstellung gibt es einen Kühl- bzw. Heizkreislauf.
Es kann jedoch jeder Wärmeaustauscher auch getrennt betrieben werden.

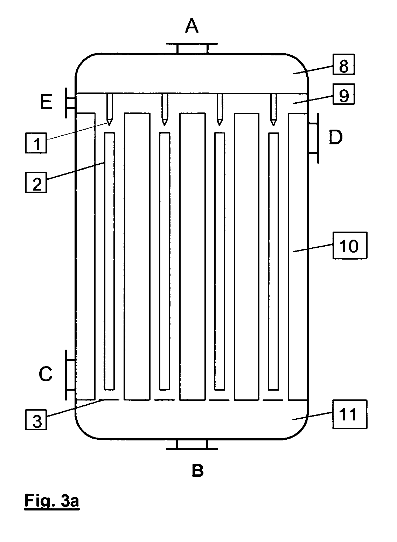

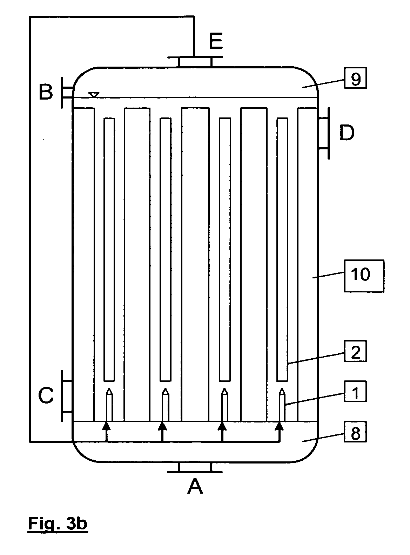

Die einzelnen Reaktoren können zu einem Bündel zusammengefasst sein, wie Figur 3 zeigt.
Ein Bündelreaktor besteht zumindest aus zwei Einzelreaktoren. Ein Bündel weist vorzugsweise 3 bis 14 Einzelreaktoren. Im Bündelreaktor weisen die einzelnen Teilreaktoren vorzugsweise gleiche Dimensionen auf.

Die erfindungsgemäße Vorrichtung kann einen oder mehrere Bündelreaktor(en) oder mindestens zwei Einzelreaktoren oder eine Kombination von einem oder mehreren Bündelreaktor(en) mit einem oder mehreren Einzelreaktoren umfassen.

In der erfindungsgemäßen Vorrichtung können, wie bereits oben aufgeführt, die Düsen in den Reaktoren unterschiedlich angeordnet sein:
a) in allen Reaktoren befindet sich die Düse im oberen Teil des Reaktors (Figur 3a)
b) in allen Reaktoren befindet sich die Düse im unteren Teil des Reaktors (Figur 3b)
c) in den Reaktoren ist mindestens eine Düse im unteren Teil eines Reaktors und mindestens eine Düse im oberen Teil eines Reaktors installiert (nicht als Figur dargestellt).

Bei allen gezeigten Ausführungsformen liegt der Austritt der Düse für den Triebstrahl unterhalb des Flüssigkeitsspiegels.

Die erfindungsgemäße Vorrichtung kann unter anderem für die Umsetzung einer Flüssigkeit mit einem Gas eingesetzt werden, wobei sowohl das Gas als auch die Flüssigkeit mindestens einen Reaktanden aufweisen.

Optional kann auch eine Flüssigkeit eingesetzt werden, die einen Katalysator homogen gelöster oder in suspendierter Form enthält, unter der Voraussetzung, dass dessen mittlere Korngröße kleiner 200 µm, besonders bevorzugt kleiner 100 µm ist.

Die Reaktionsprodukte werden mit der Gas- oder Flüssigphase, bevorzugt mit der Flüssigphase ausgetragen.

In der erfindungsgemäßen Apparatur können Reaktionen im Druckbereich von 0,2 bis 40 MPa und im Temperaturbereich von 0 bis 350 °C durchgeführt werden. Die Reaktion findet dabei bevorzugt an einem in der flüssigen Phase homogen gelösten Katalysator statt.

In der erfindungsgemäßen Vorrichtung können beispielsweise Oxidationen, Epoxidierung von Olefinen, Hydroformylierungen, Hydroaminierungen, Hydroaminomethylierungen, Hydrocyanierungen, Hydrocarboxyalkylierung, Aminierungen, Ammonoxydation, Oximierungen und Hydrierungen durchgeführt werden.

Bevorzugt werden in der erfindungsgemäßen Vorrichtung Reaktionen durchgeführt, bei denen der Katalysator mit dem flüssigen Einsatzstoff eingespeist wird und in der flüssigen Produkt/Edukt-Phase homogen gelöst ist, wie beispielsweise die Herstellung von Aldehyden und/oder Alkoholen durch Hydroformylierung von Verbindungen mit olefinischen Doppelbindungen in Gegenwart von Kobalt- oder Rhodiumcarbonylen mit oder ohne Zusatz von Phosphor enthaltenden Liganden. Die folgenden Beispiele sollen das erfindungsgemäße Verfahren unter Verwendung der erfindungsgemäßen Apparatur erläutern, ohne die Erfindung darauf zu beschränken.

### Beispiel 1

### (Vergleichsbeispiel: Strahlschlaufenreaktor H/D=6)

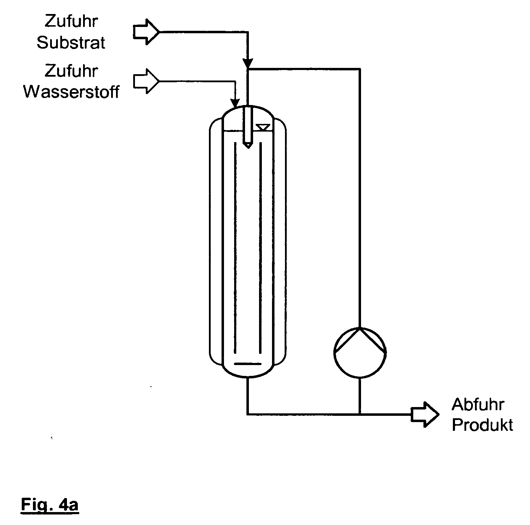

In einem Strahlschlaufenreaktor gemäß Figur 4a mit einem Volumen von 10 L, einem Verhältnis von Höhe zu Durchmesser (Schlankheitsgrad) H/D=6 und Düse oben wurden 2-(Hydroxymethyl)-acrylsäuremethylester in THF mit in einer Konzentration von 0,1 mol/L und die Katalysatorvorstufe [Rh(COD)]BF₄ in einem molaren Verhältnis Substrat (S) zu Katalysator (C) S/C=250 und dem Liganden (-)-2,3-Bis[(2*R*,5*R*)-2,5-dimethylphospholano]-N-methylmaleimide(1,5-cyclooctadiene)rhodium(I)tetrafluoroborat, C₂₅H₃₉BF₄NO₂P₂Rh, (CatASium®-MN(S), Evonik Degussa GmbH) versetzt und bei 5 MPa Wasserstoffdruck und einer Verweilzeit von 90 min bei 25 °C zur Reaktion gebracht. Es wurde das Produkt (2-Hydroxymethylpropionsäuremethylester) mit einem Enantiomerenüberschuss von 95 % bei vollständigem Umsatz erhalten. Die Reaktion zeigte sich sensitiv gegenüber dem Wasserstoffpartialdruck, wobei niedrigere Drücke zu einer erhöhten Nebenproduktbildung in Form von Oligomerisierung des Substrates und Dehydroxylierung des Produktes führt.

### Beispiel 2

### (erfindungsgemäß)

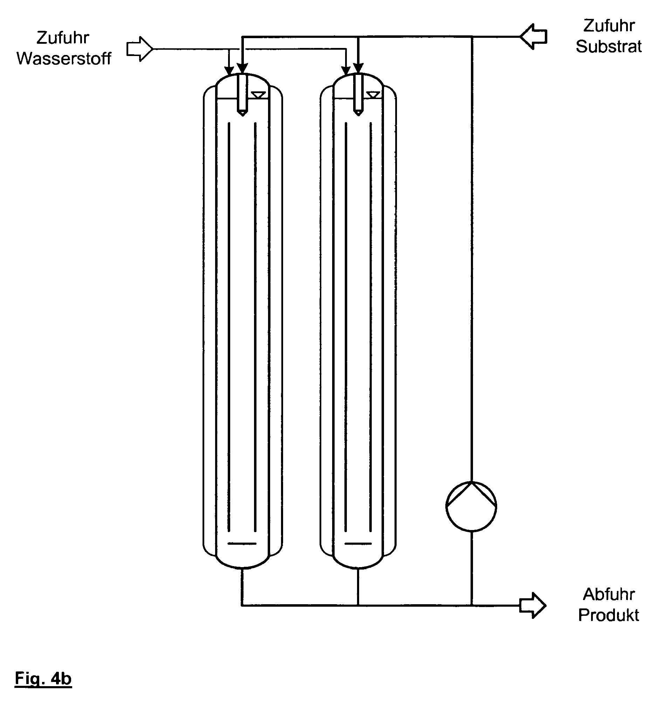

In der erfindungsgemäßen Vorrichtung gemäß Figur 4b mit zwei parallel angeordneten Strahlschlaufenreaktoren mit einem Schlankheitsgrad von 10 mit jeweils 5 L Reaktionsvolumen wurde die Reaktion entsprechend den in Beispiel 1 angegebenen Reaktionsbedingungen durchgeführt. Vollständiger Umsatz konnte in der erfindungsgemäßen Vorrichtung bereits nach 75 min erzielt werden, wobei ein Enantiomerenüberschuss von 95 % erhalten wurde. Der Wasserstoffdruck konnte auf 4 MPa reduziert werden, ohne dass eine signifikante Nebenproduktbildung zu beobachten war.

Die Beispiele zeigen, dass bei erfindungsgemäßer Durchführung der Reaktion in einer Vorrichtung mit zwei parallel geschalteten Strahlschlaufenreaktoren mit jeweils einem Schlankheitsgrad von 10 eine deutliche Erhöhung der Reaktionsgeschwindigkeit bei gleichzeitig verringertem Wasserstoffpartialdruck im Vergleich zu einem einzelnen Reaktor mit einem Schlankheitsgrad von 6 möglich ist.

### Bezugszeichenliste

- 1: Strahldüse
- 2: Leitrohr
- 3: Prallplatte
- 4: Doppelmantel
- 8: Flüssigkeitsverteiler Treibstrahlmedium
- 9: Gasraum für Frischgaszufuhr
- 10: Mantelraum für Umlenkungen für Wärmeträger
- 11: Flüssigkeitssammler Treibstrahlmedium
- A: Zulauf Treibstrahlmedium
- B: Ablauf Treibstrahlmedium
- C: Prozessanschluss Wärmeträger
- D: Prozessanschluss Wärmeträger
- E: Zufuhr Frischgas

## Patentansprüche

1. Vorrichtung für die kontinuierliche Umsetzung einer Flüssigkeit mit mindestens einem weiteren Fluid,
**dadurch gekennzeichnet,**
**dass** die Vorrichtung mindestens zwei parallel miteinander verschaltete Strahlschlaufen-Reaktoren und einen gemeinsamen äußeren Flüssigkeitsumlauf aufweist.

2. Vorrichtung nach Anspruch 1,
**dadurch gekennzeichnet,**
**dass** sie einen oder mehrere Strahlschlaufen-Bündelreaktor(en) aufweist.

3. Vorrichtung nach Anspruch 1 oder 2,
**gekennzeichnet durch**,
mindestens einen Schlaufenreaktor und mindestens einen Strahlschlaufen-Bündelreaktor aufweist.

4. Vorrichtung nach einem der Ansprüche 1 bis 3,
**dadurch gekennzeichnet,**
**dass** in allen Reaktoren Düsen im oberen Teil des Reaktors installiert sind.

5. Vorrichtung nach einem der Ansprüche 1 bis 3,
**dadurch gekennzeichnet,**
**dass** in allen Reaktoren Düsen im unteren Teil des Reaktors installiert sind.

6. Vorrichtung nach einem der Ansprüche 1 bis 3,
**dadurch gekennzeichnet,**
**dass** in den Reaktoren mindestens eine Düse im unteren Teil eines Reaktors und mindestens eine Düse im oberen Teil eines Reaktors installiert ist.

7. Vorrichtung nach einem der Ansprüche 1 bis 6, **dadurch gekennzeichnet, dass** jeder Düse ein Ablauf für die Flüssigkeit zugeordnet ist, dass Düse und Ablauf bezüglich des internen Flüssigkeitskreislaufs diametral im Reaktor angeordnet sind, und dass der äußere Flüssigkeitsumlauf die Düse mit dem Ablauf verbindet.

8. Vorrichtung nach einem der Ansprüche 1 bis 7, **dadurch gekennzeichnet, dass** im äußeren Flüssigkeitsumlauf genau eine Pumpe angeordnet ist.

9. Vorrichtung nach einem der Ansprüche 1 bis 7, **dadurch gekennzeichnet, dass**, unter Verzicht auf Einbau eines reaktor internen Wärmetauschers, im äußeren Flüssigkeitsumlauf ein Wärmetauscher zum Austausch von Wärme zwischen der im äußeren Flüssigkeitskreislauf geführten Flüssigkeit und einem Wärmeträger vorgesehen ist.

10. Verfahren zur Umsetzung einer Flüssigkeit mit mindestens einem zweiten Fluid,
**dadurch gekennzeichnet,**
**dass** die Umsetzung in einer Vorrichtung gemäß einem der Ansprüche 1 bis 8 durchgeführt wird.

11. Verfahren nach Anspruch 10,
**dadurch gekennzeichnet,**
**dass** in der Vorrichtung Oxidationen, Epoxidierung von Olefinen, Hydroformylierungen, Hydroaminierungen, Hydroaminomethylierungen, Hydrocyanierungen, Hydrocarboxyalkylierung, Aminierungen, Ammonoxydation, Oximierungen und Hydrierungen durchgeführt werden.

12. Verfahren nach Anspruch 11,
**dadurch gekennzeichnet,**
**dass** Verbindungen mit olefinischen Doppelbindungen durch Hydroformylierung mit Synthesegas zu Aldehyden und/oder Alkoholen umgesetzt werden.

## Claims

1. Device for the continuous reaction of a liquid with at least one other fluid, **characterized in that** the device comprises at least two jet loop reactors interconnected in parallel and common outer liquid recirculation.

2. Device according to Claim 1, **characterized in that** it comprises one or more jet loop bundle reactors.

3. Device according to Claim 1 or 2, **characterized by** at least one loop reactor and at least one jet loop bundle reactor.

4. Device according to one of Claims 1 to 3, **characterized in that** in all the reactors nozzles are installed in the upper part of the reactor.

5. Device according to one of Claims 1 to 3, **characterized in that** in all the reactors nozzles are installed in the lower part of the reactor.

6. Device according to one of Claims 1 to 3, **characterized in that** in the reactors at least one nozzle is installed in the lower part of a reactor and at least one nozzle is installed in the upper part of a reactor.

7. Device according to one of Claims 1 to 6, **characterized in that** an outlet for the liquid is assigned to each nozzle, **in that** the nozzle and the outlet are arranged diametrally in the reactor with respect to the internal liquid circuit, and **in that** the outer liquid recirculation connects the nozzle to the outlet.

8. Device according to one of Claims 1 to 7, **characterized in that** precisely one pump is arranged in the outer liquid recirculation.

9. Device according to one of Claims 1 to 7, **characterized in that** without a heat exchanger being installed inside the reactors a heat exchanger is provided in the outer liquid recirculation in order to exchange heat between the liquid conveyed in the outer liquid circuit and a heat carrier.

10. Method for the reaction of a liquid with at least one second fluid, **characterized in that** the reaction is carried out in a device according to one of Claims 1 to 8.

11. Method according to Claim 10, **characterized in that** oxidations, epoxidation of olefins, hydroformylations, hydroaminations, hydroaminomethylations, hydrocyanizations, hydrocarboxyalkylation, aminations, ammoxidation, oximations and hydrogenations are carried out in the device.

12. Method according to claim 11, **characterized in that** compounds having olefinic double bonds are reacted by hydroformylation with synthesis gas to form aldehydes and/or alcohols.

## Revendications

1. Dispositif pour la mise en réaction continue d'un liquide avec au moins un autre fluide, **caractérisé en ce que** le dispositif comprend au moins deux réacteurs à jet et à boucle de circulation connectés en parallèle l'un avec l'autre et un circuit de liquide extérieur commun.

2. Dispositif selon la revendication 1, caractérisé en qu'il comprend un ou plusieurs réacteurs à jet et à boucle de circulation en faisceau.

3. Dispositif selon la revendication 1 ou 2, caractérisé en qu'il comprend au moins un réacteur à boucle de circulation et au moins un réacteur à jet et à boucle de circulation en faisceau.

4. Dispositif selon l'une quelconque des revendications 1 à 3, **caractérisé en ce que** des buses sont installées dans la partie supérieure du réacteur dans tous les réacteurs.

5. Dispositif selon l'une quelconque des revendications 1 à 3, **caractérisé en ce que** des buses sont installées dans la partie inférieure du réacteur dans tous les réacteurs.

6. Dispositif selon l'une quelconque des revendications 1 à 3, **caractérisé en ce qu'**au moins une buse est installée dans la partie inférieure d'un réacteur et au moins une base est installée dans la partie supérieure d'un réacteur dans les réacteurs.

7. Dispositif selon l'une quelconque des revendications 1 à 6, **caractérisé en ce qu'**une sortie pour le liquide est attribuée à chaque buse, **en ce que** la buse et la sortie sont agencées diamétralement dans le réacteur par rapport au circuit de liquide intérieur, et **en ce que** le circuit de liquide extérieur raccorde la buse avec la sortie.

8. Dispositif selon l'une quelconque des revendications 1 à 7, **caractérisé en ce qu'**exactement une pompe est agencée dans le circuit de liquide extérieur.

9. Dispositif selon l'une quelconque des revendications 1 à 7, **caractérisé en ce qu'**un échangeur de chaleur est prévu dans le circuit de liquide extérieur pour l'échange de chaleur entre le liquide conduit dans le circuit de liquide extérieur et un caloporteur, l'incorporation d'un échangeur de chaleur interne dans le réacteur étant omise.

10. Procédé de mise en réaction d'un liquide avec au moins un second fluide, **caractérisé en ce que** la mise en réaction est réalisée dans un dispositif selon l'une quelconque des revendications 1 à 8.

11. Procédé selon la revendication 10, **caractérisé en ce que** des oxydations, une époxydation d'oléfines, des hydroformylations, des hydroaminations, des hydroaminométhylations, des hydrocyanations, des hydrocarboxyalkylations, des aminations, des ammonoxydations, des oximations et des hydrogénations sont réalisées dans le dispositif.

12. Procédé selon la revendication 11, **caractérisé en ce que** des composés contenant des doubles liaisons oléfiniques sont mis en réaction par hydroformylation avec un gaz de synthèse pour former des aldéhydes et/ou des alcools.
